# EUROPÄISCHE PATENTSCHRIFT

(11) **EP 2 475 908 B1**
(45) Veröffentlichungstag und Bekanntmachung des Hinweises auf die Patenterteilung: **20.08.2014**
(21) Anmeldenummer: 10754428.0
(22) Anmeldetag: 08.09.2010
(51) Int. Cl.: F16D 23/06

(54) **SYNCHRONISATIONSEINHEIT EINES GETRIEBES**
SYNCHRONIZATION UNIT OF A GEARBOX
UNITÉ DE SYNCHRONISATION D'UNE TRANSMISSION

(30) Priorität: 08.09.2009 DE 102009040541; 12.01.2010 DE 102010004382
(43) Veröffentlichungstag der Anmeldung: 18.07.2012
(73) Patentinhaber: HOERBIGER Antriebstechnik Holding GmbH, 86956 Schongau (DE)
(72) Erfinder: LEDETZKY, Erol, 74074 Heilbronn (DE)
(74) Vertreter: Prinz & Partner
(86) Internationale Anmeldenummer: PCT/EP2010/005511
(87) Internationale Veröffentlichungsnummer: WO 2011/029585

(56) Entgegenhaltungen:
- EP-A1- 0 253 187
- EP-A2- 1 900 956
- DE-U1-202009 010 459
- US-A1- 2004 154 892

## Beschreibung

Die Erfindung betrifft eine Synchronisationseinheit eines Getriebes, mit einem Synchronkörper, der auf einer Getriebewelle drehfest angebracht ist, einer Schaltmuffe, die relativ zum Synchronkörper drehfest, aber axial verschieblich angeordnet ist, einem Synchronring zur Kopplung des Synchronkörpers mit einem Gangrad des Getriebes über eine Reibverbindung, sowie einer Vorsynchroneinheit, die an der Schaltmuffe angreift und bei einer Axialverschiebung der Schaltmuffe den Synchronring mit einer axialen Schaltkraft gegen das zu koppelnde Gangrad beaufschlagt, wobei an axialen Fortsätzen des Synchronrings Anlageflächen ausgebildet sind, die mit entsprechenden Gegenflächen am Synchronkörper und/oder an der Vorsynchroneinheit zusammenwirken können.

Derartige Synchronisationseinheiten sind allgemein aus dem Stand der Technik bekannt und werden insbesondere bei Schaltgetrieben für Kraftfahrzeuge eingesetzt. So zeigt die gattungsgemäße DE 10 2007 010 307 B3 in einigen Ausführungsformen eine Schaltkupplungsanordnung, bei der an einem Synchronring axiale Fortsätze ausgebildet sind, die als Mitnahmemittel dienen und mit dem Synchronkörper und/oder der Vorsynchroneinheit, genauer einem Synchronglied der Vorsynchroneinheit, zusammenwirken können.

Die DE 20 2009 010 459 U1 zeigt ebenfalls eine Synchronisationseinheit mit allen Merkmalen im Oberbegriff des Anspruchs 1, wobei die Vorsynchroneinheit eine Sperrkeilsynchronisationsbaugruppe ist, die einen Synchronstein und einen Sperrstein umfasst. Zwischen dem Sperrstein und dem Synchronstein ist eine Feder vorgesehen, die den Sperrstein gegen die Schaltmuffe beaufschlagt, wobei ein vom Sperrstein abgewandtes Ende der Feder in Umfangsrichtung verschieblich im Synchronstein aufgenommen ist, um ein weitgehend ungehindertes Umschlagen des Synchronsteins in seine Sperrstellung zu ermöglichen.

Außerdem gibt es im Stand der Technik bereits Schaltgetriebe mit einer sogenannten Servo-Synchronisierung, um den Synchronisationsvorgang zu erleichtern. Hierbei wird die Energie aus dem Drehmoment der zueinander verdrehbaren Zahnräder genutzt, um die über den Schalthebel des Schaltgestänges auf die Synchronisationseinheit aufgebrachte Schaltkraft zu verstärken.

Beispielsweise offenbart die DE 10 2006 044 352-B3 eine Servo-Synchronisierung, bei der die Vorsynchroneinheit in einer Ausnehmung des Synchronkörpers aufgenommen und als axial verschiebliches, schwenkbar gelagertes Druckstück ausgebildet ist. Das Druckstück und der Synchronkörper weisen jeweils Synchro-Servo-Schrägen auf, welche bei einem Schaltvorgang des Getriebes zusammenwirken und zu einer Schaltkraftverstärkung führen. Die beschriebenen Ausführungsformen beschränken sich dabei auf Sperrsynchronisationsgetriebe, bei denen die Sperrelemente in Form einer Sperrverzahnung am Synchronring der Getriebesynchronisation ausgebildet sind. Die Ausbildung der Synchro-Servo-Schrägen am Synchronkörper sowie die schwenkbare Lagerung der Vorsynchroneinheit sind fertigungstechnisch mit erheblichem Aufwand verbunden. Außerdem ist eine schwenkbare Lagerung der Vorsynchroneinheit bei Sperrsynchronisationsgetrieben, die eine Vorsynchroneinheit mit Sperrelementen (z.B. Sperrstein oder Sperrverzahnung) aufweisen, unerwünscht, da dies zu einer Funktionsbeeinträchtigung des Getriebes führen kann.

Aufgabe der Erfindung ist die Realisierung einer Schaltkraftverstärkung bei Getriebe-Synchronisationseinheiten, die weitgehend unabhängig von der Sperrkonstruktion des Getriebes ist.

Diese Aufgabe wird gelöst durch eine Synchronisationseinheit der eingangs genannten Art, bei der die Anlageflächen der axialen Synchronring-Fortsätze wenigstens abschnittsweise so geneigt sind, dass eine in Umfangsrichtung auf die Anlageflächen wirkende Kraft den Synchronring mit einer axialen Kraftkomponente gegen das zu koppelnde Gangrad beaufschlagt. Die Ausbildung der Anlageflächen am Synchronring ist fertigungstechnisch mit minimalem Aufwand realisierbar und ermöglicht eine weitgehend freie Wahl der Sperrkonstruktion des Getriebes.

Vorzugsweise erstrecken sich die Anlageflächen jeweils in einer Ebene, die ausgehend von einer Radialebene um einen Winkel α bezüglich einer in der Radialebene liegenden, radial verlaufenden Rotationsachse verdreht ist. Infolge einer derart ausgerichteten Schräge wird aus einem Überschussanteil des Reibmoments eine axial ausgerichtete Kraftkomponente generiert, die eine auf die Vorsynchroneinheit aufgebrachte Schaltkraft verstärkt. Dabei hängt die Größe der als Servokraft wirkenden Kraftkomponente von der Wahl des Winkels α ab.

In einer Ausführungsform der Synchronisationseinheit weist der Synchronkörper an seinem Außenumfang eine Ausnehmung auf, in der die Vorsynchroneinheit aufgenommen ist.

Die Vorsynchroneinheit kann in dieser Ausführungsform in Umfangsrichtung begrenzt verschieblich in der Ausnehmung aufgenommen sein. Sie ist außerdem bezüglich einer radialen Achse der Vorsynchroneinheit drehfest in der Ausnehmung gehalten. Durch diese drehfeste, aber in Umfangsrichtung zwischen einer Sperrstellung und einer Freigabestellung bewegliche Lagerung der Vorsynchroneinheit können Sperrelemente des Getriebes, zum Beispiel ein Sperrstein oder eine Sperrverzahnung, besonders vorteilhaft auch als Teil der Vorsynchroneinheit ausgebildet sein.

Vorzugsweise erstrecken sich die axialen Fortsätze des Synchronrings in die Ausnehmung des Synchronkörpers.

Die Vorsynchroneinheit kann in Umfangsrichtung zwischen zwei axialen Fortsätzen des Synchronrings angeordnet sein oder einen axialen Fortsatz aufnehmen. Dadurch lässt sich die Vorsynchroneinheit in Umfangsrichtung auf einfache Art und Weise mit dem Synchronring koppeln.

Besonders bevorzugt ist die Vorsynchroneinheit in Umfangsrichtung im Wesentlichen spielfrei zwischen den beiden axialen Fortsätzen des Synchronrings angeordnet oder nimmt spielfrei einen axialen Fortsatz auf. In Umfangsrichtung spielfrei bedeutet hier, dass keine Relativbewegung (ausschließlich) in Tangentialrichtung möglich ist, schließt aber eine Relativbewegung, die sich aus einer Tangentialkomponente und einer Axialkomponente zusammensetzt, nicht aus.

In einer weiteren Ausführungsform ist die Vorsynchroneinheit eine Sperrkeilsynchronisationsbaugruppe mit einem Synchronstein und einem darin beweglich aufgenommenen Sperrstein. Neben der Vorsynchronisierung übernimmt die Vorsynchroneinheit hierbei auch eine Sperrfunktion, welche eine Axialverschiebung der Schaltmuffe vor einer Drehzahlsynchronisierung zwischen Synchronkörper und Gangrad verhindert.

In dieser Ausführungsform kann der Synchronstein in Umfangsrichtung im Wesentlichen spielfrei zwischen zwei axialen Fortsätzen des Synchronrings angeordnet sein.

Der Synchronstein weist bevorzugt Gegenflächen auf, die den geneigten Anlageflächen des Synchronrings zugewandt sind. Die Servofunktion wird hierbei durch eine Verschiebung zwischen Synchronstein und Synchronring realisiert, wobei sich die Verschieberichtung aus einer Tangentialkomponente und einer Axialkomponente zusammensetzt.

Besonders bevorzugt erstrecken sich die Gegenflächen des Synchronsteins im Wesentlichen parallel zu den angrenzenden, geneigten Anlageflächen des Synchronrings. Die aneinander angrenzenden Bauteile bilden folglich einen flächigen Kontakt aus, wodurch die Materialbeanspruchung und der damit einhergehende Verschleiß gering gehalten werden.

In einer besonderen Ausführungsvariante gehen die geneigten Anlageflächen des Synchronrings zu einem freien Ende der axialen Fortsätze hin in Anschlagflächen über, welche sich im Wesentlichen in axialer Richtung erstrecken und vorzugsweise einen Abschnitt einer Radialebene bilden. In einer nicht-geschalteten Neutralstellung des Getriebes verhindern diese Anschlagflächen eine Servofunktion, welche ansonsten in der Neutralstellung zu unerwünschten Schleppmomenten führen würde.

In einer weiteren Ausführungsform der Synchronisationseinheit umfasst die Vorsynchroneinheit ein Druckstück, wobei das Druckstück eine Sperrverzahnung aufweist, die eine Axialbewegung der Schaltmuffe relativ zum Druckstück freigeben oder sperren kann. Da in diesem Fall die Sperrverzahnung am Synchronring entfällt, ist hier auf einfache Art und Weise die vorteilhafte Servofunktion mit einer besonders kostengünstigen Synchronringkonstruktion kombiniert.

Bevorzugt weist das Druckstück in dieser Ausführungsform den geneigten Anlageflächen des Synchronrings zugewandte Gegenflächen auf.

Weitere Merkmale und Vorteile der Erfindung ergeben sich aus der nachfolgenden Beschreibung bevorzugter Ausführungsformen unter Bezugnahme auf die Zeichnungen. In diesen zeigen:
- Figur 1 einen perspektivischen Detailausschnitt einer erfindungsgemäßen Synchronisationseinheit mit einer als Sperrkeilsynchronisationsbaugruppe ausgebildeten Vorsynchroneinheit;
- Figur 2 eine schematische Detailskizze der Synchronisationseinheit aus Figur 1 gemäß einer ersten Ausführungsvariante in Radialansicht;
- Figur 3 eine schematische Detailskizze der Synchronisationseinheit aus Figur 1 gemäß einer zweiten Ausführungsvariante in Radialansicht;
- Figur 4 eine schematische Detailskizze der Synchronisationseinheit aus Figur 1 gemäß einer dritten Ausführungsvariante in einer Sperrstellung in Radialansicht;
- Figur 5 eine schematische Detailskizze der Synchronisationseinheit aus Figur 1 gemäß der dritten Ausführungsvariante in einer Neutralstellung in Radialansicht;
- Figur 6 einen perspektivischen Detailausschnitt einer erfindungsgemäßen Synchronisationseinheit, mit einer Vorsynchroneinheit, die eine Sperrverzahnung aufweist, im Schnitt;
- Figur 7 eine schematische Detailskizze der Synchronisationseinheit aus Figur 6 gemäß einer ersten Ausführungsvariante in Radialansicht;
- Figur 8 ein schematisches Querschnittdetail einer erfindungsgemäßen Synchronisationseinheit, mit einer Vorsynchroneinheit, die einen Sperrkörper umfasst;
- Figur 9 einen perspektivischen Detailausschnitt der Synchronisationseinheit gemäß Figur 8; und
- Figur 10 den Detailausschnitt gemäß Figur 9 mit tangential geschnittener Vorsynchroneinheit.

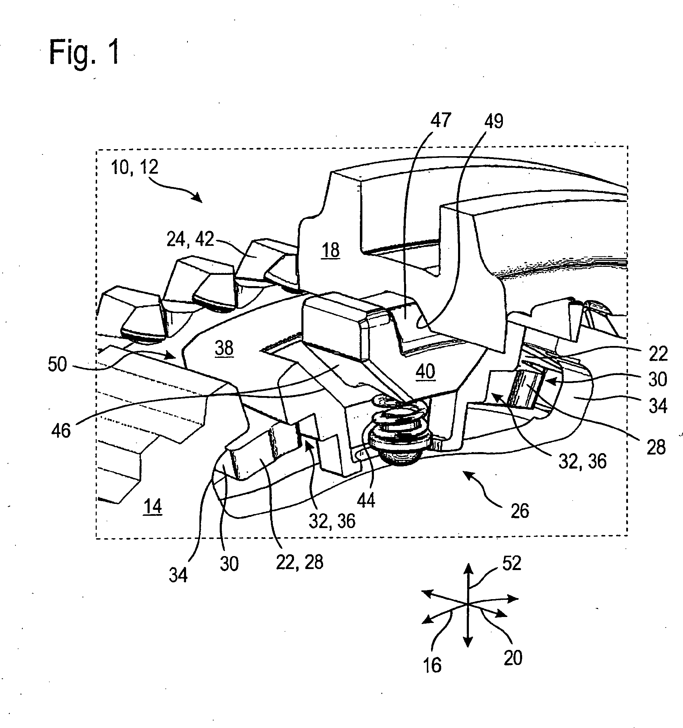

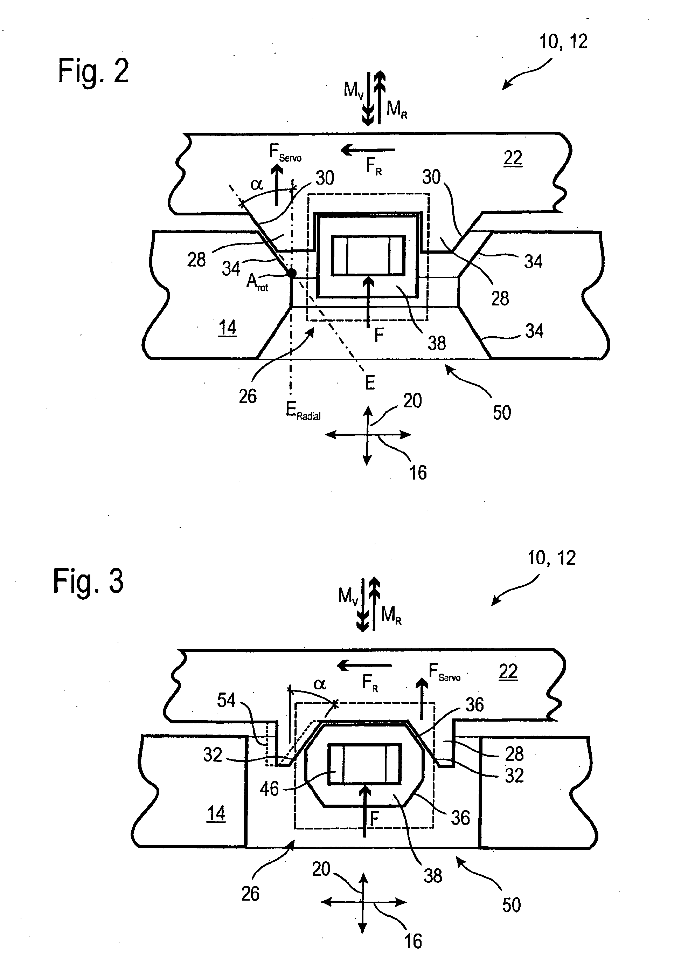

Die Figur 1 zeigt einen Detailausschnitt eines Schaltgetriebes 10 im Bereich einer Synchronisationseinheit 12. Die Synchronisationseinheit 12 umfasst einen Synchronkörper 14, der drehfest auf einer Getriebewelle sitzt und sich in Umfangsrichtung 16 um eine (nicht dargestellte) Rotationsachse dreht, eine mit dem Synchronkörper 14 drehfest verbundene Schaltmuffe 18, die relativ zum Synchronkörper 14 in axialer Richtung 20 verschieblich angeordnet ist, einen Synchronring 22 zur Kopplung des Synchronkörpers 14 mit einem Gangrad 24 des Getriebes 10 über eine Reibverbindung, sowie eine Vorsynchroneinheit 26, die an der Schaltmuffe 18 angreift und bei einer Axialverschiebung der Schaltmuffe 18 den Synchronring 22 mit einer axialen Schaltkraft F (Figur 2) gegen das zu koppelnde Gangrad 24 beaufschlagt.

Ausgehend von seinem umlaufenden, in der Regel konischen Ringquerschnitt weist der Synchronring 22 axiale Fortsätze 28 auf, an denen Anlageflächen 30, 32 ausgebildet sind, wobei die Anlagenflächen 30, 32 mit entsprechenden Gegenflächen 34 und/oder 36 am Synchronkörper 14 bzw. an der Vorsynchroneinheit 26 zusammenwirken können.

Gemäß dem Ausführungsbeispiel in Figur 1 ist die Vorsynchroneinheit 26 als Sperrkeilsynchronisationsbaugruppe mit einem Synchronstein 38 und einem darin in Umfangsrichtung beweglich aufgenommenen Sperrstein 40 ausgebildet.

Das allgemeine Funktionsprinzip eines Schaltgetriebes mit einer solchen Sperrkeilsynchronisationsbaugruppe ist bereits in der DE 10 2007 010 307 B3 ausführlich beschrieben und wird nachfolgend anhand eines Schaltvorgangs nur in seinen Grundzügen erläutert.

Ausgehend von einer nicht-geschalteten Neutralstellung des Schaltgetriebes 10 gemäß Figur 1 wird zum Beispiel über eine (nicht dargestellte) Schaltgabel eine axiale Schaltkraft F (vgl. Figur 2) auf die Schaltmuffe 18 aufgebracht, sodass die Schaltmuffe 18 in Richtung zu einer Schaltverzahnung 42 des nicht näher dargestellten Gangrads 24 beaufschlagt ist.

Ein Federelement 44 sitzt unterhalb des Sperrsteins 40 in einer Ausnehmung des Synchronsteins 38 und drückt den Sperrstein 40 radial nach außen. Das Federelement kann sich an dem Synchronkörper 14 oder, vorzugsweise, am Synchronstein 38 abstützen. Da der Sperrstein 40 durch das Federelement 44 radial nach außen gegen die Schaltmuffe 18 gedrückt wird und im Wesentlichen formschlüssig in eine Ausnehmung der Schaltmuffe 18 eingreift, wird der Sperrstein 40 beim Aufbringen der Schaltkraft F axial gegen den Synchronstein 38, dieser axial gegen den Synchronring 22 und der Synchronring 22 wiederum mit einer konisch ausgebildeten Reibfläche gegen eine Reibfläche des Gangrads 24 beaufschlagt.

Bei einem Drehzahlunterschied zwischen dem Synchronkörper 14 und dem Gangrad 24 findet aufgrund der Reibverbindung zwischen Synchronring 22 und Gangrad 24 eine Relativdrehung zwischen dem Synchronring 22 und dem Synchronkörper 14 statt.

Da der Synchronstein 38 in Umfangsrichtung 16 üblicherweise spielfrei zwischen zwei axialen, in Umfangsrichtung beabstandeten Fortsätzen 28 des Synchronrings 22 gehalten und der Sperrstein 40 durch den Eingriff in die Schaltmuffe 18 in Umfangsrichtung 16 spielfrei mit dem Synchronkörper 14 gekoppelt ist, resultiert daraus eine Relativbewegung zwischen dem Synchronstein 38 und dem Sperrstein 40. Diese Relativbewegung wird durch zusammenwirkende Keilflächen 46 am Synchronstein 38 und am Sperrstein 40 begrenzt, wobei diese gegeneinander beaufschlagten Keilflächen 46 zunächst eine Bewegung des Sperrsteins 40 radial einwärts und damit auch eine axiale Bewegung der Schaltmuffe 18 in Richtung zur Schaltverzahnung 42 verhindern. Diese Kraftkomponente radial einwärts wird durch eine axiale Schrägfläche 47 am Sperrstein 40 und eine entsprechende schräge Gegenfläche 49 an der Schaltmuffe 18 erzeugt.

Erst wenn der Anpressdruck zwischen den Keilflächen 46 aufgrund einer Drehzahlsynchronisierung zwischen dem Synchronkörper 14 und dem Gangrad 24 abnimmt, reicht die Schaltkraft F aus, um den Sperrstein 40 radial einwärts zu bewegen und die Schaltmuffe 18 axial am Sperrstein 40 vorbei auf die Schaltverzahnung 42 des Gangrads 24 zu schieben. Daraufhin sind der Synchronkörper 14 und das Gangrad 24 über die Schaltmuffe 18 in Umfangsrichtung 16 formschlüssig und weitgehend spielfrei verbunden.

Der Synchronkörper 14 weist an seinem Außenumfang eine Ausnehmung 50 auf, in der die Vorsynchroneinheit 26 aufgenommen ist. In der Regel sind mehrere, insbesondere drei Vorsynchroneinheiten 26 vorgesehen, die gleichmäßig über den Umfang des Synchronkörpers 14 verteilt sind. Dementsprechend sind mehrere Ausnehmungen 50 zur Aufnahme jeweils einer Vorsynchroneinheit 26 am Außenumfang des Synchronkörpers 14 ausgebildet.

Die Vorsynchroneinheit 26 ist in der Ausnehmung 50 in Umfangsrichtung 16 begrenzt verschieblich aufgenommen und darüber hinaus bezüglich einer radialen Achse der Vorsynchroneinheit 26 drehfest gehalten. Diese drehfeste Lagerung ergibt sich, je nach Ausführungsform, beispielsweise durch die drehfeste Kopplung der Schaltmuffe 18 mit dem Sperrstein 40 sowie dessen nur in Umfangsrichtung 16 bewegliche Aufnahme im Synchronstein 38 und/oder durch die drehfeste Fixierung des Synchronsteins 38 zwischen zwei axialen Fortsätzen 28 des Synchronrings 22.

Die axialen Fortsätze 28 des Synchronrings 22 erstrecken sich in die Ausnehmung 50, wobei sich vorzugsweise jeweils zwei Fortsätze 28 in eine Ausnehmung 50 erstrecken und die Vorsynchroneinheit 26 in Umfangsrichtung 16 zwischen den beiden axialen Fortsätzen 28 des Synchronrings 22 angeordnet ist.

Die Figur 2 zeigt eine schematische Detailskizze der Synchronisationseinheit 12 im Bereich der Vorsynchroneinheit 26 gemäß einer ersten Ausführungsvariante, in radialer Richtung 52 von außen nach innen gesehen. Hierbei wird deutlich, dass die Anlageflächen 30 der axialen Fortsätze 28 so geneigt sind, dass eine in Umfangsrichtung 16 auf die Anlageflächen 30 wirkende Kraft F_{R} den Synchronring 22 mit einer axialen Kraftkomponente Fₛₑᵣᵥₒ gegen das zu koppelnde Gangrad 24 beaufschlagt.

Die Anlageflächen 30 erstrecken sich dabei jeweils in einer Ebene E, die ausgehend von einer Radialebene E_{radial} um einen Winkel α bezüglich einer in der Radialebene E_{radial} liegenden, radial verlaufenden Rotationsachse Aᵣₒₜ verdreht ist. Der Winkel α liegt in der Größenordnung von 20° bis 70°, vorzugsweise bei etwa 30°. Die Kraft F_{R} ist dabei eine Reibkraft, die aus einem Überschussmoment resultiert. Dieses Überschussmoment ergibt sich wiederum als Differenz zwischen einem Reibmoment M_{R} und einem Verdrehmoment M_{V}. Das Reibmoment M_{R} geht aus der Reibverbindung zwischen dem Synchronring 22 und dem Gangrad 24 hervor, wohingegen das entgegengesetzt gerichtete Verdrehmoment Mv den in Umfangsrichtung 16 wirkenden Einfluss der Schaltkraft F berücksichtigt. In der Praxis sind die geometrischen Verhältnisse sowie die Reibwerte immer so gewählt, dass gilt: M_{R} / M_{V} > 1. Dieser Quotient wird auch als Sperrsicherheit bezeichnet, wobei nur bei einer Sperrsicherheit > 1 eine zufriedenstellende Synchronisation gewährleistet ist.

Gemäß Figur 2 ist die Vorsynchroneinheit 26, genauer der Synchronstein 38 der Vorsynchroneinheit 26, in Umfangsrichtung 16 im Wesentlichen spielfrei zwischen zwei axialen Fortsätzen 28 des Synchronrings 22 angeordnet.

Ein Vorteil der ersten Ausführungsvariante gemäß Figur 2 liegt darin, dass der Synchronkörper 14 den geneigten Anlageflächen 30 des Synchronrings 22 zugewandte Gegenflächen 34 aufweist, sodass eine Gegenkraft zur Kraftkomponente F_{Servo} in den Synchronkörper 14 und nicht in die Vorsynchroneinheit 26 eingeleitet wird. Diese axiale Gegenkraft kann über den Synchronkörper 14 problemlos durch ein Getriebelager aufgenommen werden.

Analog zu Figur 2 zeigt die Figur 3 eine schematische Detailskizze der Synchronisationseinheit 12 im Bereich der Vorsynchroneinheit 26 in radialer Richtung 52 von außen nach innen gesehen, allerdings gemäß einer zweiten Ausführungsvariante. Bezüglich der allgemeinen Konstruktion und Funktionsweise des Schaltgetriebes 10 wird auf die obige Beschreibung zu den Figuren 1 und 2 verwiesen. Um Wiederholungen zu vermeiden, wird im Folgenden lediglich auf die Unterschiede zur ersten Ausführungsvariante gemäß Figur 2 eingegangen.

Bei der Synchronisationseinheit 12 gemäß Figur 3 wird die axiale Kraftkomponente F_{Servo} nicht zwischen Synchronring 22 und Synchronkörper 14, sondern zwischen Synchronring 22 und Vorsynchroneinheit 26 erzeugt. Hierzu weist die Vorsynchroneinheit 26, genauer der Synchronstein 38 der Vorsynchroneinheit 26, geneigte Gegenflächen 36 auf, die entsprechend geneigten Anlageflächen 32 des Synchronrings 22 zugewandt sind.

Dieser konstruktive Unterschied führt nach dem Prinzip "actio=reactio" dazu, dass die Gegenkraft zur Kraftkomponente F_{Servo} direkt in die Vorsynchroneinheit 26, genauer in den Synchronstein 38 der Vorsynchroneinheit 26 eingeleitet wird. Diese Gegenkraft wirkt entgegen der Schaltkraft F und versucht, den Synchronstein 38 wieder in Richtung seiner axialen Neutralstellung zu schieben. Um dies zu verhindern, muss die Schaltmuffe 18 nach Einleitung der Schaltkraft F "blockiert" werden, z.B. durch eine sogenannte Schaltwalze. Als axiale Neutralstellung wird dabei eine Position der Vorsynchroneinheit 26 bezeichnet, in der die Vorsynchroneinheit 26 relativ zum Synchronkörper 14 axial mittig ausgerichtet ist.

Auch in der zweiten Ausführungsvariante gemäß Figur 3 ist die Vorsynchroneinheit 26 in Umfangsrichtung 16 im Wesentlichen spielfrei zwischen den beiden axialen Fortsätzen 28 des Synchronrings 22 angeordnet, da eine Relativdrehung in Umfangsrichtung 16 nur bei einer gleichzeitigen axialen Relativverschiebung stattfinden kann.

Alternativ kann der Synchronstein 38 in Umfangsrichtung 16 jedoch auch mit Spiel zwischen den axialen Fortsätzen 28 aufgenommen sein. Die entsprechend geänderte Kontur des Synchronrings 22 ist in Figur 3 gestrichelt angedeutet und mit dem Bezugszeichen 54 versehen.

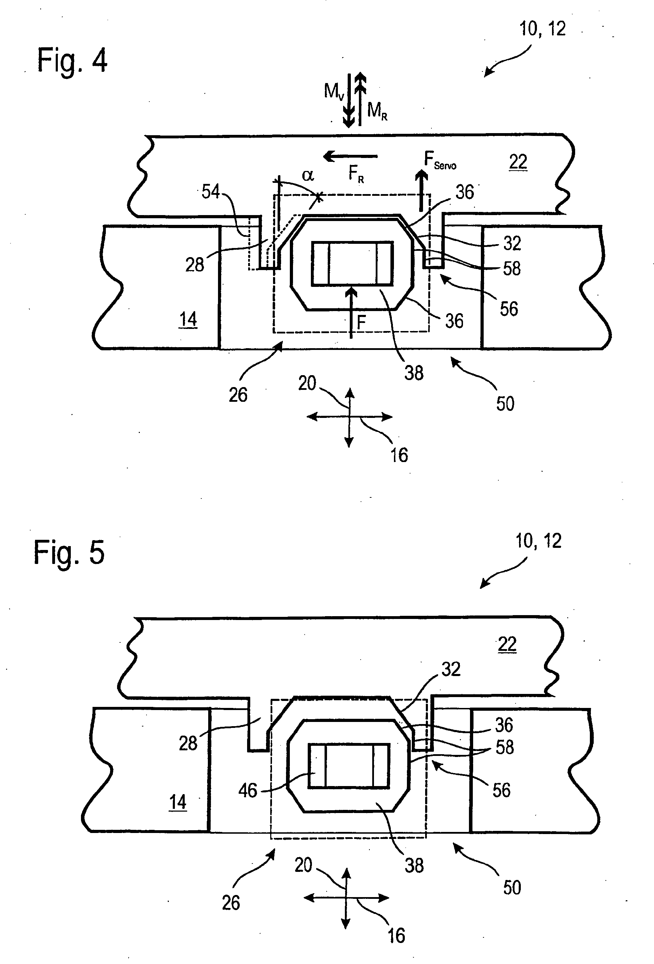

Analog zu Figur 3 zeigt die Figur 4 eine schematische Detailskizze der Synchronisationseinheit 12 im Bereich der Vorsynchroneinheit 26 in radialer Richtung 52 von außen nach innen gesehen, allerdings gemäß einer dritten Ausführungsvariante. Um Wiederholungen zu vermeiden, wird auch an dieser Stelle auf die Beschreibung der Figuren 1 bis 3 verwiesen und ausgehend von der zweiten Ausführungsvariante gemäß Figur 3 lediglich auf Unterscheidungsmerkmale eingegangen.

Im Unterschied zu Figur 3 gehen die geneigten Anlageflächen 32 des Synchronrings 22 gemäß Figur 4 zu einem freien Ende 56 der axialen Fortsätze 28 hin in Anschlagflächen 58 über, welche sich im Wesentlichen in axialer Richtung 20 erstrecken.

In Figur 4 ist eine Sperrstellung des Schaltgetriebes 10 dargestellt, bei dem der Synchronstein 38 aufgrund der Schaltkraft F gegenüber einer Neutralstellung axial in Richtung zum Synchronring 22 ausgelenkt ist. In dieser Sperrstellung ist die Funktion der Synchronisationseinheit 12 gemäß Figur 4 absolut identisch mit dem Verhalten der Synchronisationseinheit 12 gemäß Figur 3.

Ein Vorteil der dritten Ausführungsvariante wird in einer nicht-geschalteten Neutralstellung des Schaltgetriebes 10 gemäß Figur 5 deutlich. Da auf den Synchronstein 38 keine Schaltkraft F wirkt, befindet sich der Synchronstein 38 in seiner axialen Neutralstellung. In dieser Position kann sich der Synchronring 22 in Umfangsrichtung 16 relativ zum Synchronstein 38 begrenzt verdrehen. Die Relativdrehung wird hierbei durch zusammenwirkende Anschlagflächen 58 der axialen Fortsätze 28 sowie des Synchronsteins 38 begrenzt, welche sich im Wesentlichen in axialer Richtung 20 erstrecken. Somit wird beim Anschlag keine axiale Kraftkomponente F_{Servo} generiert, welche den Synchronring 22 axial gegen eine Reibfläche des Gangrads 24 beaufschlagen und dabei unter Umständen ein unerwünschtes Reibmoment zwischen Gangrad 24 und Synchronring 22, welches auch als Schleppmoment bezeichnet wird, erzeugen würde.

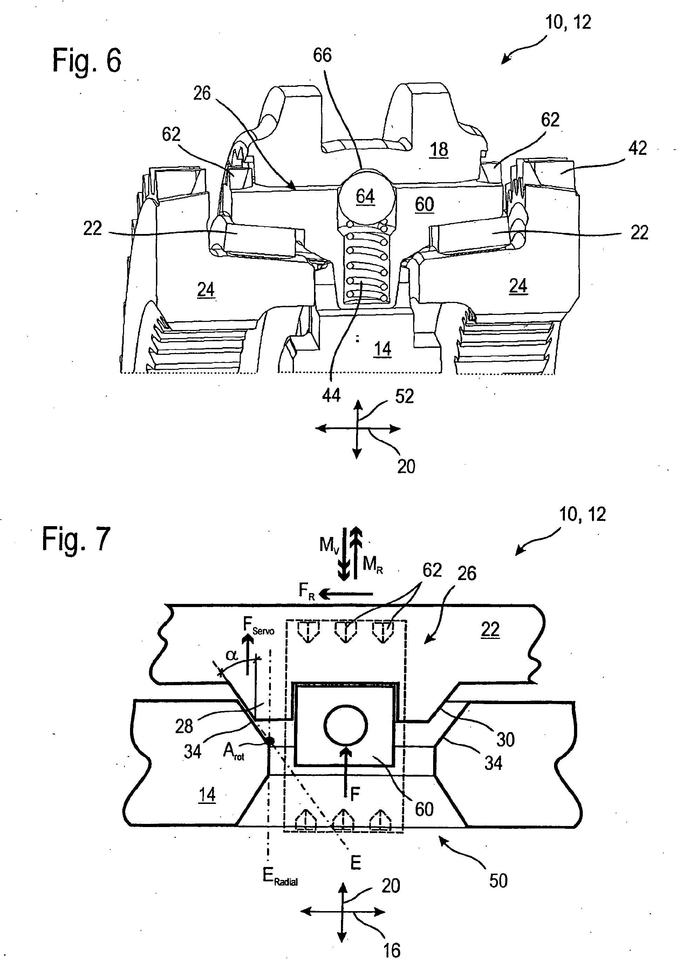

Die Figur 6 zeigt analog zu Figur 1 einen Detailausschnitt eines Schaltgetriebes 10 im Bereich einer Synchronisationseinheit 12, wobei die Vorsynchroneinheit 26 in diesem Ausführungsbeispiel jedoch keine Sperrkeilsynchronisationsbaugruppe ist. Die Vorsynchroneinheit 26 umfasst hier ein Druckstück 60, wobei das Druckstück 60 eine Sperrverzahnung 62 aufweist, die eine Axialbewegung der Schaltmuffe 18 relativ zum Druckstück 60 freigeben oder sperren kann.

Das Funktionsprinzip der dargestellten Synchronisationseinheit 12 ähnelt in seinen Grundzügen einem bekannten System nach Borg-Warner. Allerdings ist die Sperrverzahnung 62 im Unterschied zum Borg-Warner-System nicht am Synchronring 22, sondern am Druckstück 60 angeformt, was fertigungstechnische Vorteile mit sich bringt. Ein weiterer Unterschied zum Borg-Warner-System ist, dass das Druckstück 60 in Umfangsrichtung 16 mit dem Synchronring 22 gekoppelt und relativ zum Synchronkörper 14 zwischen einer Sperrstellung und einer Freigabestellung begrenzt bewegbar ist.

Die Figur 7 zeigt eine schematische Detailskizze der Synchronisationseinheit 12 aus Figur 6 gemäß einer ersten Ausführungsvariante. Diese erste Ausführungsvariante gemäß Figur 7 entspricht im Wesentlichen der ersten Ausführungsvariante gemäß Figur 2. Der einzige Unterschied ist, dass die Vorsynchroneinheit 26 in Figur 2 eine Sperrkeilsynchronisationsbaugruppe mit dem Synchronstein 38 und dem Sperrstein 40 ist und die Vorsynchroneinheit 26 gemäß Figur 7 statt dem Synchronstein 38 das Druckstück 60 mit Sperrverzahnung 62 und statt dem Sperrstein 40 ein Kraftübertragungselement 64 aufweist. Das Kraftübertragungselement 64 ist dabei in der Regel eine radial federbelastete Stahlkugel, die sich beim Umschlagen des Druckstücks 60 zwischen der Sperrstellung und der Freigabestellung in einer Umfangsnut 66 der Schaltmuffe 18 bewegt.

Die erste Ausführungsvariante gemäß Figur 2 lässt sich somit einfach auf das geänderte Sperrsystem übertragen, indem der Synchronstein 38 der Vorsynchroneinheit 26 durch das Druckstück 60 und der Sperrstein 40 der Vorsynchroneinheit 26 durch das Kraftübertragungselement 64 ersetzt wird. Dies ist in Figur 7 dargestellt.

Bei einem Drehzahlunterschied zwischen dem Synchronkörper 14 und dem Gangrad 24 bewegt sich das Druckstück 60 nach Aufbringen der axialen Schaltkraft F über die Schaltmuffe 18 und das Element 64 in Umfangsrichtung 16 in eine Anschlagstellung, in welcher die Sperrverzahnung 62 eine Axialverschiebung der Schaltmuffe 18 in Richtung zur Schaltverzahnung 42 des Gangrads 24 verhindert.

Erst wenn die Drehzahlen des Synchronkörpers 14 und des Gangrads 24 weitgehend angeglichen sind, lässt sich das Druckstück 60 durch die Schaltkraft F, die durch in Axialrichtung keilförmig zulaufende Zähne der Verzahnung 62 (siehe Figur 7) in Umfangsrichtung 16 umgelenkt wird, in Umfangsrichtung 16 in eine Freigabestellung bewegen. In der Freigabestellung kann die Schaltmuffe 18 über die Sperrverzahnung 62 und das radial eingefederte Element 64 auf die Schaltverzahnung 42 des Gangrads 24 geschoben werden.

Wie bei der Ausführungsform nach Figur 2 hat der Synchronring 22 axiale Fortsätze 28, die das Druckstück in Umfangsrichtung vorzugsweise spielfrei aufnehmen. Auch die schrägen Anlageflächen 30 und Gegenflächen 34 sind zur Kraftunterstützung vorgesehen. Es gilt diesbezüglich das zu Figur 2 Gesagte.

In analoger Art und Weise lassen sich auch die übrigen Ausführungsvarianten gemäß den Figuren 3 bis 5 auf die geänderte Vorsynchroneinheit 26 gemäß Figur 6 übertragen.

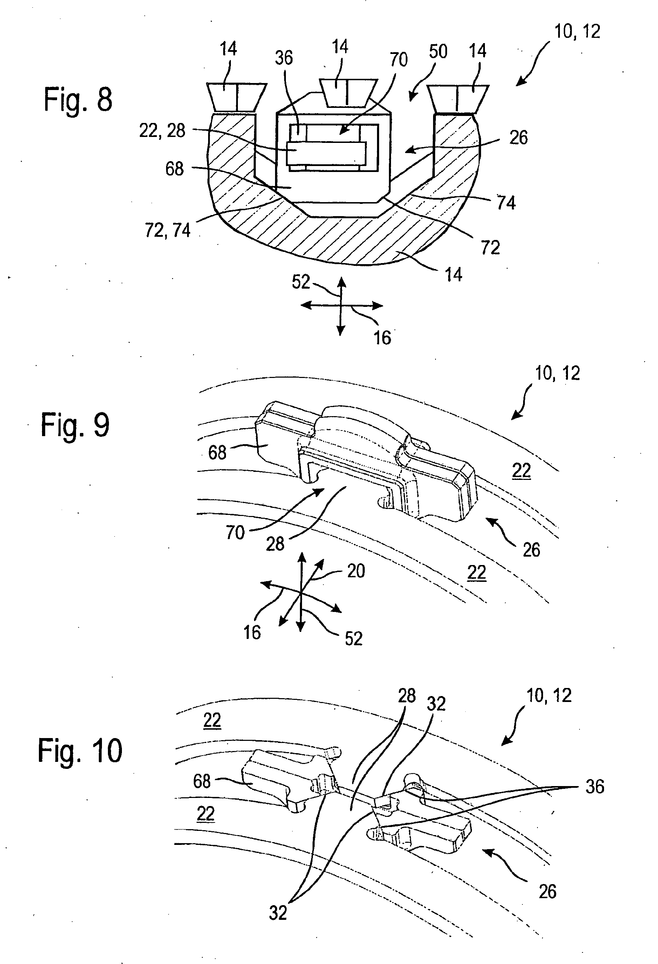

Die Figuren 8 bis 10 zeigen Ausschnitte eines Schaltgetriebes 10 im Bereich einer Synchronisationseinheit 12 gemäß einem weiteren Ausführungsbeispiel, wobei sich die Synchronisationseinheit 12 im Querschnittdetail gemäß Figur 8 in einer Sperrstellung befindet. Die Vorsynchroneinheit 26 umfasst in diesem Ausführungsbeispiel einen Sperrkörper 68, der in Anlehnung an die Figuren 1 bis 5 funktional einem Synchronstein 38 mit fest integriertem Sperrstein 40 entspricht.

In Figur 9 sind zwei Synchronringe 22 sowie die als Sperrkörper 68 ausgebildete Vorsynchroneinheit 26 in einem perspektivischen Detailausschnitt der Synchronisationseinheit 12 dargestellt. Genau wie in den vorhergehenden Ausführungsbeispielen sind die Synchronringe 22 und die Vorsynchroneinheit 26 in Umfangsrichtung 16 spielfrei gekoppelt. Der Sperrkörper 68 weist hierzu allerdings ein Fenster 70 auf, in das jeweils ein axialer Fortsatz 28 der Synchronringe 22 eingreift. Somit muss für jede Vorsynchroneinheit 26 nur ein axialer Fortsatz 28 am Synchronring 22 ausgebildet werden.

Auch in diesem Ausführungsbeispiel werden üblicherweise mehrere Vorsynchroneinheiten 26 bzw. Sperrkörper 68 verwendet, die in Ausnehmungen 50 des Synchronkörpers 14 angeordnet sind. In Umfangsrichtung 16 gesehen weist jeder axiale Fortsatz 28 am vorderen und hinteren Ende geneigte Anlageflächen 32 auf, die mit entsprechend geneigten, am Sperrkörper 68 vorhandenen Gegenflächen 36 zusammenwirken (vgl. Figur 10). Die Gegenflächen 36 sind dabei im Inneren des Fensters 70 ausgebildet, und zwar so, dass sie einander zugewandt sind und sich das Fenster 70 zur Mitte des Sperrkörpers 68 hin verengt.

Jeder Sperrkörper 68 ist auf seiner radialen Innenseite mit zwei Sperrflächen 72 versehen, die in Umfangsrichtung 16 betrachtet vorne und hinten angeordnet sind. Diesen gegenüber liegen Abstützflächen 74, die am Rand der Ausnehmung 50 des Synchronkörpers 14 ausgebildet sind, in welcher der Sperrkörper 68 aufgenommen ist.

Wenn die Schaltmuffe 18 ausgehend von ihrer mittigen Neutralstellung durch die axiale Schaltkraft F in eine Richtung betätigt wird, werden aufgrund des außenseitigen Eingriffs in die Schaltmuffe 18 die Sperrkörper 68 axial mitgenommen. Dadurch wird der entsprechende Synchronring 22 auf die zugeordnete Reibfläche des Gangrads 24 gedrückt. Aufgrund der Drehzahldifferenz wird der Synchronring 22 mitgenommen, was aufgrund des Eingriffs der axialen Fortsätze 28 in das Fenster 70 des Sperrkörpers 68 dazu führt, dass der Sperrkörper 68 in Umfangsrichtung 16 mitgenommen wird, bis seine Sperrfläche 72 auf die entsprechende Abstützfläche 74 in der Ausnehmung 50 des Synchronkörpers 14 aufläuft (siehe Figur 8). Dadurch wird eine den Sperrkörper 68 radial nach außen drückende Kraft erzeugt. Diese sperrt ein vorzeitiges Durchschalten der Schaltmuffe 18. Gleichzeitig laufen die Anlageflächen 32 der Fortsätze 28 des Synchronrings 22 auf die entsprechenden Gegenflächen 36 am Rand des Fensters 70 des Sperrkörpers 68 auf. Dadurch wird der entsprechende Synchronring 22 in axialer Richtung 20 gegen die Reibfläche des Gangrads 24 gedrückt.

Der Sperrkörper 68 ist in Figur 10 im Bereich des Fensters 70 tangential geschnitten, sodass das Zusammenspiel der geneigten Anlageflächen 32 der Synchronringe 22 mit den entsprechenden Gegenflächen 36 des Sperrkörpers 68 gut zu erkennen ist. Durch dieses Zusammenspiel der Flächen 32, 36 wird beim Synchronisieren des Schaltgetriebes 10 analog zu den oben beschriebenen Ausführungsvarianten eine vorteilhafte axiale Servokraft F_{Servo} zur Verstärkung der Schaltkraft F erzeugt.

## Patentansprüche

1. Synchronisationseinheit eines Getriebes (10), mit
einem Synchronkörper (14), der auf einer Getriebewelle drehfest angebracht ist,
einer Schaltmuffe (18), die relativ zum Synchronkörper (14) drehfest, aber axial verschieblich angeordnet ist,
einem Synchronring (22) zur Kopplung des Synchronkörpers (14) mit einem Gangrad (24) des Getriebes (10) über eine Reibverbindung, sowie
einer Vorsynchroneinheit (26), die an der Schaltmuffe (18) angreift und bei einer Axialverschiebung der Schaltmuffe (18) den Synchronring (22) mit einer axialen Schaltkraft (F) gegen das zu koppelnde Gangrad (24) beaufschlagt,
wobei an axialen Fortsätzen (28) des Synchronrings (22) Anlageflächen (30, 32) ausgebildet sind, die mit entsprechenden Gegenflächen (34, 36) am Synchronkörper (14) und/oder an der Vorsynchroneinheit (26) zusammenwirken können,
**dadurch gekennzeichnet, dass** die Anlageflächen (30, 32) wenigstens abschnittsweise so geneigt sind, dass eine in Umfangsrichtung (16) auf die Anlageflächen (30, 32) wirkende Kraft (F_{R}) den Synchronring (22) mit einer axialen Kraftkomponente (F_{Servo}) gegen das zu koppelnde Gangrad (24) beaufschlagt.

2. Synchronisationseinheit nach Anspruch 1, **dadurch gekennzeichnet, dass** sich die Anlageflächen (30, 32) jeweils in einer Ebene (E) erstrecken, die ausgehend von einer Radialebene (E_{Radial}) um einen Winkel (α) bezüglich einer in der Radialebene (E_{Radial}) liegenden, radial verlaufenden Rotationsachse (Aᵣₒₜ) verdreht ist.

3. Synchronisationseinheit nach Anspruch 1 oder 2, **dadurch gekennzeichnet, dass** der Synchronkörper (14) an seinem Außenumfang eine Ausnehmung (50) aufweist, in der die Vorsynchroneinheit (26) aufgenommen ist.

4. Synchronisationseinheit nach Anspruch 3, **dadurch gekennzeichnet, dass** die Vorsynchroneinheit (26) in Umfangsrichtung (16) begrenzt verschieblich in der Ausnehmung (50) aufgenommen ist.

5. Synchronisationseinheit nach Anspruch 3 oder 4, **dadurch gekennzeichnet, dass** sich die axialen Fortsätze (28) des Synchronrings (22) in die Ausnehmung (50) erstrecken.

6. Synchronisationseinheit nach einem der vorhergehenden Ansprüche, **dadurch gekennzeichnet, dass** die Vorsynchroneinheit (26) in Umfangsrichtung (16) zwischen zwei axialen Fortsätzen (28) des Synchronrings (22) angeordnet ist oder einen axialen Fortsatz (28) aufnimmt.

7. Synchronisationseinheit nach einem der vorhergehenden Ansprüche, **dadurch gekennzeichnet, dass** die Vorsynchroneinheit (26) in Umfangsrichtung (16) im Wesentlichen spielfrei zwischen zwei axialen Fortsätzen (28) des Synchronrings (22) angeordnet ist oder spielfrei einen axialen Fortsatz (28) aufnimmt.

8. Synchronisationseinheit nach einem der vorhergehenden Ansprüche, **dadurch gekennzeichnet, dass** die Vorsynchroneinheit (26) eine Sperrkeilsynchronisationsbaugruppe mit einem Synchronstein (38) und einem Sperrstein (40) ist.

9. Synchronisationseinheit nach Anspruch 8, **dadurch gekennzeichnet, dass** der Synchronstein (38) in Umfangsrichtung (16) im Wesentlichen spielfrei zwischen zwei axialen Fortsätzen (28) des Synchronrings (22) angeordnet ist.

10. Synchronisationseinheit nach Anspruch 8 oder 9, **dadurch gekennzeichnet, dass** der Synchronstein (38) den geneigten Anlageflächen (32) des Synchronrings (22) zugewandte Gegenflächen (36) aufweist.

11. Synchronisationseinheit nach einem der vorhergehenden Ansprüche, **dadurch gekennzeichnet, dass** sich die Gegenflächen (34, 36) im Wesentlichen parallel zu den angrenzenden, geneigten Anlageflächen (30, 32) erstrecken.

12. Synchronisationseinheit nach einem der vorhergehenden Ansprüche, **dadurch gekennzeichnet, dass** die geneigten Anlageflächen (30, 32) des Synchronrings (22) zu einem freien Ende (56) der axialen Fortsätze (28) hin in Anschlagflächen (58) übergehen, welche sich im Wesentlichen in axialer Richtung (20) erstrecken und vorzugsweise einen Abschnitt einer Radialebene bilden.

13. Synchronisationseinheit nach einem der Ansprüche 1 bis 7, **dadurch gekennzeichnet, dass** die Vorsynchroneinheit (26) ein Druckstück (60) umfasst, wobei das Druckstück (60) eine Sperrverzahnung (62) aufweist, welche eine Axialbewegung der Schaltmuffe (18) relativ zum Druckstück (60) freigeben oder sperren kann, und wobei der Synchronring (22) sperrverzahnungsfrei ausgebildet ist.

14. Synchronisationseinheit nach Anspruch 13, **dadurch gekennzeichnet, dass** das Druckstück (60) den geneigten Anlageflächen (32) des Synchronrings (22) zugewandte Gegenflächen (36) aufweist.

## Claims

1. A synchronization unit of a gearbox (10), comprising
a synchronizer body (14) which is mounted on a gear shaft so as to be non-rotatable relative thereto,
a shifting sleeve (18) which is arranged so as to be non-rotatable relative to the synchronizer body (14), but to be axially displaceable,
a synchronizer ring (22) for coupling the synchronizer body (14) to a speed change gear (24) of the gearbox (10) by means of a frictional connection, and
a pre-synchronizing unit (26) which engages the shifting sleeve (18) and, upon an axial displacement of the shifting sleeve (18), applies an axial shifting force (F) to urge the synchronizer ring (22) against the speed change gear (24) to be coupled,
contact surfaces (30, 32) being formed on axial extensions (28) of the synchronizer ring (22) and being adapted to cooperate with corresponding mating surfaces (34, 36) on the synchronizer body (14) and/or on the pre-synchronizing unit (26),
**characterized in that** the contact surfaces (30, 32) are inclined at least in sections such that a force (F_{R}) acting on the contact surfaces (30, 32) in the circumferential direction (16) urges the synchronizer ring (22) by an axial force component (Fₛₑᵣᵥₒ) against the speed change gear (24) to be coupled.

2. The synchronization unit according to claim 1, **characterized in that** the contact surfaces (30, 32) each extend in a plane (E) which, starting from a radial plane (E_{radial}), is rotated by an angle (α) in relation to a radially extending axis of rotation (Aᵣₒₜ) which lies in the radial plane (E_{radial}).

3. The synchronization unit according to claim 1 or 2, **characterized in that** the synchronizer body (14) has a recess (50) on its outer circumference, the pre-synchronizing unit (26) being received in the recess.

4. The synchronization unit according to claim 3, **characterized in that** the pre-synchronizing unit (26) is received in the recess (50) for limited displacement in the circumferential direction (16).

5. The synchronization unit according to claim 3 or 4, **characterized in that** the axial extensions (28) of the synchronizer ring (22) extend into the recess (50).

6. The synchronization unit according to any of the preceding claims, **characterized in that** the pre-synchronizing unit (26) is arranged in the circumferential direction (16) between two axial extensions (28) of the synchronizer ring (22) or receives an axial extension (28).

7. The synchronization unit according to any of the preceding claims, **characterized in that** the pre-synchronizing unit (26) is arranged substantially free of play in the circumferential direction (16) between two axial extensions (28) of the synchronizer ring (22) or receives an axial extension (28) free of play.

8. The synchronization unit according to any of the preceding claims, **characterized in that** the pre-synchronizing unit (26) is a locking wedge synchronization assembly having a synchronizer block (38) and a locking block (40).

9. The synchronization unit according to claim 8, **characterized in that** the synchronizer block (38) is arranged substantially free of play in the circumferential direction (16) between two axial extensions (28) of the synchronizer ring (22).

10. The synchronization unit according to claim 8 or 9, **characterized in that** the synchronizer block (38) has mating surfaces (36) facing the inclined contact surfaces (32) of the synchronizer ring (22).

11. The synchronization unit according to any of the preceding claims, **characterized in that** the mating surfaces (34, 36) extend substantially parallel to the adjacent inclined contact surfaces (30, 32).

12. The synchronization unit according to any of the preceding claims, **characterized in that** the inclined contact surfaces (30, 32) of the synchronizer ring (22) transition into stop surfaces (58) towards a free end (56) of the axial extensions (28), the stop surfaces extending substantially in the axial direction (20) and preferably defining a section of a radial plane.

13. The synchronization unit according to any of claims 1 to 7, **characterized in that** the pre-synchronizing unit (26) comprises a thrust piece (60), the thrust piece (60) including a locking toothing (62) which is adapted to enable or disable an axial movement of the shifting sleeve (18) relative to the thrust piece (60), and the synchronizer ring (22) being formed free of a locking toothing.

14. The synchronization unit according to claim 13, **characterized in that** the thrust piece (60) has mating surfaces (36) facing the inclined contact surfaces (32) of the synchronizer ring (22).

## Revendications

1. Unité de synchronisation d'une boîte de vitesses (10), comportant
un corps de synchronisation (14) qui est monté solidaire en rotation sur un arbre de transmission,
un manchon coulissant (18) qui est agencé solidaire en rotation par rapport au corps de synchronisation (14) mais axialement déplaçable,
une bague de synchronisation (22) pour coupler le corps de synchronisation (14) à un pignon de vitesse (24) de la boîte de vitesses (10) par une liaison par frottement, et
une unité de pré-synchronisation (26) qui s'engage sur le manchon coulissant (18) et qui sollicite la bague de synchronisation (22) contre le pignon de vitesse (24) à coupler avec une force de commutation axiale (F) lors d'un déplacement axial du manchon coulissant (18),
des surfaces d'appui (30, 32) étant réalisées sur des saillies axiales (28) de la bague de synchronisation (22), lesquelles sont aptes à coopérer avec des surfaces antagonistes (34, 36) correspondantes sur le corps de synchronisation (14) et/ou sur l'unité de pré-synchronisation (26),
**caractérisée en ce que** les surfaces d'appui (30, 32) sont au moins par tronçons inclinées de telle sorte qu'une force (F_{R}) agissant dans le sens périphérique (16) sur les surfaces d'appui (30, 32) sollicite la bague de synchronisation (22) contre le pignon de vitesse (24) à coupler avec une composante de force axiale (F_{Servo}).

2. Unité de synchronisation selon la revendication 1, **caractérisée en ce que** les surfaces d'appui (30, 32) s'étendent chacune dans un plan (E) qui est tourné à partir d'un plan radial (E_{Radial}) selon un angle (α) par rapport à un axe de rotation (Aᵣₒₜ) se trouvant dans le plan radial (E_{Radial}) et s'étendant de manière radiale.

3. Unité de synchronisation selon la revendication 1 ou 2, **caractérisée en ce que** sur sa périphérie extérieure, le corps de synchronisation (14) présente un évidement (50) dans lequel l'unité de pré-synchronisation (26) est reçue.

4. Unité de synchronisation selon la revendication 3, **caractérisée en ce que** l'unité de pré-sychronisation (26) est reçue dans l'évidement (50) de manière à être déplaçable de façon limitée dans le sens périphérique (16).

5. Unité de synchronisation selon la revendication 3 ou 4, **caractérisé en ce que** les saillies axiales (28) de la bague de synchronisation (22) s'étendent dans l'évidement (50).

6. Unité de synchronisation selon l'une des revendications précédentes, **caractérisée en ce que** l'unité de pré-synchronisation (26) est agencée dans le sens périphérique (16) entre deux saillies axiales (28) de la bague de synchronisation (22) ou reçoit une saillie axiale (28).

7. Unité de synchronisation selon l'une des revendications précédentes, **caractérisée en ce que** l'unité de pré-synchronisation (26) est agencée sensiblement sans jeu dans le sens périphérique (16) entre deux saillies axiales (28) de la bague de synchronisation (22) ou reçoit une saillie axiale (28) sans jeu.

8. Unité de synchronisation selon l'une des revendications précédentes, **caractérisée en ce que** l'unité de pré-synchronisation (26) est un ensemble de synchronisation à clavette de blocage présentant un bloc de synchronisation (38) et un bloc de blocage (40).

9. Unité de synchronisation selon la revendication 8, **caractérisée en ce que** le bloc de synchronisation (38) est agencé sensiblement sans jeu dans le sens périphérique (16) entre deux saillies axiales (28) de la bague de synchronisation (22).

10. Unité de synchronisation selon la revendication 8 ou 9, **caractérisée en ce que** le bloc de synchronisation (38) présente des surfaces antagonistes (36) tournées vers les surfaces d'appui (32) inclinées de la bague de synchronisation (22).

11. Unité de synchronisation selon l'une des revendications précédentes, **caractérisée en ce que** les surfaces antagonistes (34, 36) s'étendent sensiblement parallèlement aux surfaces d'appui (30, 32) inclinées adjacentes.

12. Unité de synchronisation selon l'une des revendications précédentes, **caractérisée en ce que** les surfaces d'appui (30, 32) inclinées de la bague de synchronisation (22) se transforment vers une extrémité libre (56) des saillies axiales (28) en surfaces de butée (58) qui s'étendent sensiblement dans le sens axial (20) et forment de préférence un tronçon d'un plan radial.

13. Unité de synchronisation selon l'une des revendications 1 à 7, **caractérisée en ce que** l'unité de pré-synchronisation (26) comprend une pièce de poussée (60), la pièce de poussée (60) présentant une denture de blocage (62) qui est apte à autoriser ou à bloquer un mouvement axial du manchon coulissant (18) par rapport à la pièce de poussée (60), et la bague de synchronisation (22) étant réalisée sans denture de blocage.

14. Unité de synchronisation selon la revendication 13, **caractérisée en ce que** la pièce de poussée (60) présente des surfaces antagonistes (36) tournées vers les surfaces d'appui (32) de la bague de synchronisation (22).
